# EUROPEAN PATENT APPLICATION

(11) **EP 4 838 324 A1**
(43) Date of publication of application: **11.11.2026**
(21) Application number: 25174207.8
(22) Date of filing: 05.05.2025
(51) Int. Cl.: G05B 23/02

(54) **ASSISTED RESPONSE TO A CANDIDATE ROOT CAUSE OF A FAULT OF A WIND TURBINE**

(71) Applicant: VESTAS WIND SYSTEMS A/S, 8200 Aarhus N (DK)
(72) Inventor: Rasmussen, Jes, 8464 Galten (DK); Spange, Paul, 8300 Odder (DK)
(74) Representative: Vestas Patents Department

(57) **Abstract**

Disclosed is a method, performed by a wind turbine monitoring system, for providing one or more responses to a candidate root cause of a fault. The method comprises obtaining operational data associated with a wind turbine. The method comprises determining, based on the operational data, a set of candidate root causes by applying a first machine learning, ML, model to the operational data. The method comprises obtaining, based on the set of candidate root causes, maintenance protocol data associated with maintenance instructions of the wind turbine. The method comprises determining, based on the maintenance protocol data and the set of candidate root causes, the one or more responses associated with the set of candidate root causes. Determining the one or more responses comprises applying, based on the set of candidate root causes, a second ML model to the maintenance protocol data.

## Description

The present disclosure pertains to the field of wind turbine control. The present disclosure relates to a method for providing one or more responses to a candidate root cause of a fault.

### BACKGROUND

A wind turbine comprises sensors and actuators which collect large amounts of operational data regarding the operational state of the wind turbine. The operational data may be stored in a data repository (e.g. in form of logs) and optionally sent to e.g. a remote operations centre. When a fault occurs in a wind turbine, the collected data may be studied to determine the root cause of the fault and a service team may be sent to the wind turbine to determine and/or solve the issue. In some instances, the service team determines the root cause on site, but are unable to solve it immediately, requiring additional visits from the service team.

### SUMMARY

There is a need for improving identification of root causes of faults, solving of faults, and maintenance of wind turbines.

It is an object of the present disclosure to improve the ability of determining one or more responses to a set of candidate root causes of a fault, to provide instruction information to enable a service team to solve a fault of a wind turbine in a fast and direct manner with a reduced risk of unnecessary visits of the wind turbine.

Accordingly, it would be a benefit to provide a wind turbine monitoring system and a method which mitigate, alleviate, or address the existing shortcomings and can determine one or more responses to a set of candidate root causes of a fault, and can provide instruction information as a recommendation for a solution to the fault.

Disclosed is a method, performed by a wind turbine monitoring system, for providing one or more responses to a candidate root cause of a fault. The method comprises obtaining operational data associated with a wind turbine. The method comprises determining, based on the operational data, a set of candidate root causes, e.g., by applying a first machine learning, ML, model to the operational data. The method comprises obtaining, based on the set of candidate root causes, maintenance protocol data associated with maintenance instructions of the wind turbine. The method comprises determining, based on the maintenance protocol data and the set of candidate root causes, the one or more responses associated with the set of candidate root causes. Determining the one or more responses comprises applying, based on the set of candidate root causes, a second ML model to the maintenance protocol data. The method may comprise providing, based on the one or more responses, instruction information indicative of a work instruction for a recommendation for solving the fault.

Disclosed is a wind turbine monitoring system, the wind turbine monitoring system comprising memory circuitry, an interface, and processor circuitry. The wind turbine monitoring system is configured to perform any of the methods disclosed herein.

Disclosed is a wind turbine, the wind turbine comprising a wind turbine monitoring system according to the wind turbine monitoring system disclosed herein.

Disclosed is a computer storage medium storing one or more programs, the one or more programs comprising instructions, which when executed by an electronic device cause the electronic device to perform any of the methods disclosed herein.

It is an advantage of the present disclosure that the disclosed wind turbine monitoring system and method may allow for determining, based on operational data, a candidate root cause of a fault at a wind turbine. The method may allow for generating a response to the root cause and/or instruction information using relevant maintenance protocols. A service team may receive the instruction information, which may enable them to target the root cause causing the fault at a minimal number of visits, preferable at the first service visit. This may lead to a reduction of the number of faults at a wind turbine requiring multiple visits from a service team, freeing up personnel to handle other tasks. It is further advantageous that solving a fault faster may lead to improved efficiency of a wind turbine due to reduced down-time.

Further, it is an advantage that the disclosed method may allow for early detection of indicators associated with an upcoming, predicted or imminent fault, and may provide a work instruction indicating a solution to pre-emptively alleviate, and/or anticipate an upcoming, predicted or imminent fault, and control an operation of the wind turbine to avoid the fault from occurring. For example, by handling an upcoming, predicted, or imminent fault during a scheduled visit by the service team, the method may reduce the number of visits from service teams at a wind turbine.

### BRIEF DESCRIPTION OF THE DRAWINGS

The above and other features and advantages of the present disclosure will become readily apparent to those skilled in the art by the following detailed description of exemplary embodiments thereof with reference to the attached drawings, in which:
Fig. 1 is a diagram illustrating schematically an example wind turbine park with a controller according to this disclosure,
Fig. 2 is a diagram illustrating schematically an example wind turbine monitoring system according to this disclosure,
Fig. 3 shows an example graph representation of operational data over time according to this disclosure,
Fig. 4 is a flow-chart illustrating an example method, performed by a wind turbine monitoring system, for providing one or more responses to a candidate root cause of a fault according to this disclosure, and
Fig. 5 is a block diagram illustrating an example wind turbine monitoring system according to this disclosure.

### DETAILED DESCRIPTION

Various exemplary embodiments and details are described hereinafter, with reference to the figures when relevant. It should be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

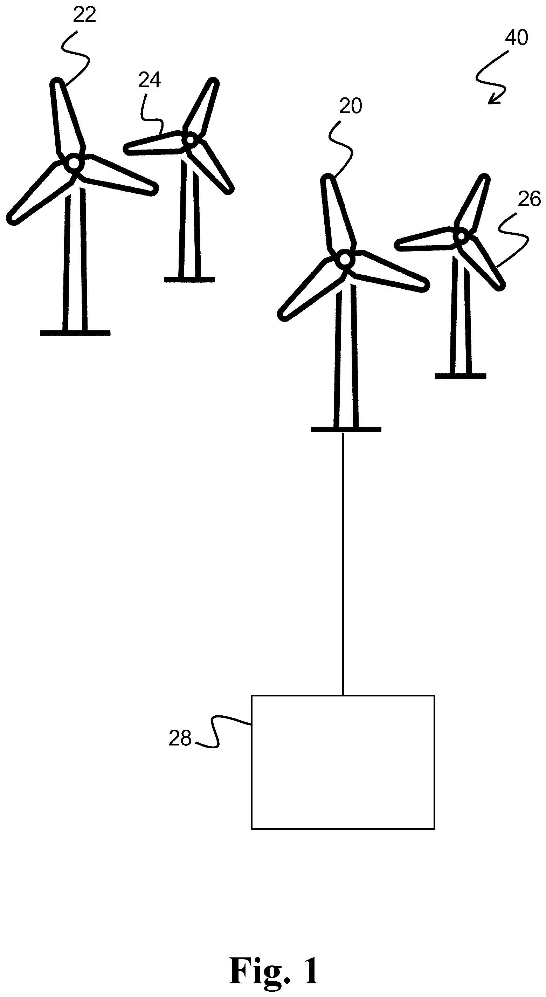

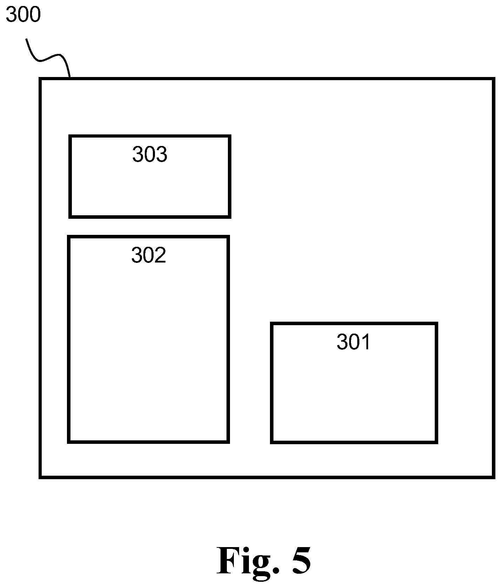

Fig. 1 is a diagram illustrating a wind turbine park 40 comprising one or more wind turbines 20, 22, 24, 26 and a controller 28. The controller may be configured to control the wind turbines of the wind turbine park 40. The controller 28 may form part of a wind turbine 20, 22, 24, 26 or may be external to a wind turbine 20, 22, 24, 26. The controller may be seen as a controller configured to control operations of the one or more wind turbines 20, 22, 24, 26. The controller 28 may comprise a wind turbine monitoring system, such as the wind turbine monitoring system disclosed herein (such as the wind turbine monitoring system 300 shown in Fig. 5).

The wind turbines 20, 22, 24, 26 for example include a tower and a nacelle atop the tower. Each wind turbine 20, 22, 24, 26 may comprise sensors and/or actuators for obtaining data, such as operational data, related to the wind turbine. The operational data may also be called wind turbine data.

The wind turbine monitoring system is for example configured to monitor the wind turbine. In some examples, the wind turbine monitoring system is configured to monitor one or more wind turbines, such as one or more wind turbines of the wind turbine park 40. The wind turbine park may also be referred to as a wind farm 40. The wind turbine monitoring system may be located at the wind turbine, in proximity to a wind turbine, and/or remote from a wind turbine. For example, when the wind turbine monitoring system is remote or in proximity from the wind turbine, the wind turbine monitoring system is configured to communicate with the wind turbine.

A fault may occur at the wind turbine as an anomaly and/or a malfunction of a part of the wind turbine, such as a wind turbine system. The fault may result in a down-time of the wind turbine. In some examples, one time occurrence or repeated occurrence of a fault may result in suboptimal operations of the wind turbine, and/or a failure of a part of the wind turbine, potentially resulting in a shut-down of the wind turbine.

It is to be understood that the present disclosure equally applies to a group of wind turbines arranged as a wind turbine park.

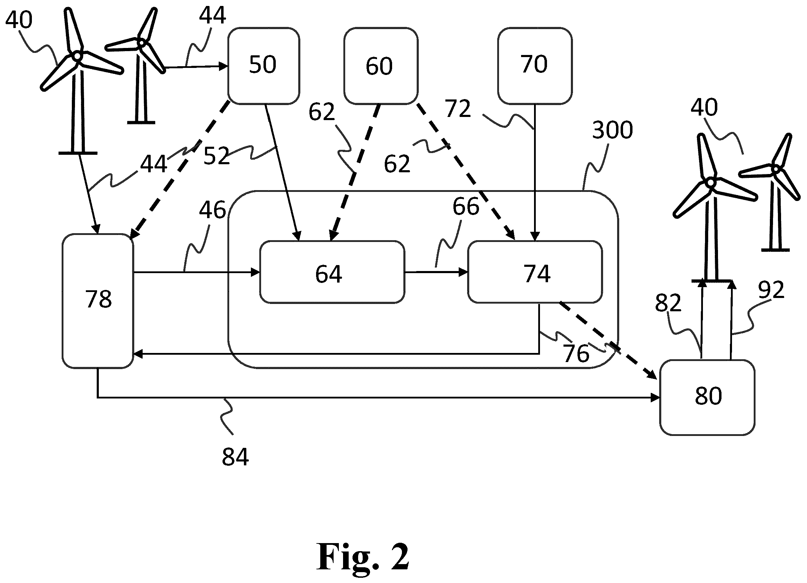

Fig. 2 is a diagram illustrating schematically an example wind turbine monitoring system 300. Fig. 2 shows wind turbine(s) being part of a wind turbine park 40. The wind turbines of the wind turbine park 40 may comprise one or more sensors and/or actuators. The one or more sensors and/or actuators may be used for obtaining, collecting, and/or transmitting sensor data and/or actuator data, which may be part of operational data 44 associated with the operations of respective wind turbines of a wind turbine park 40.

In one or more example methods, the operational data 44 comprises one or more of: sensor data from one or more sensors of the wind turbine, log data associated with the wind turbine, actuator data from one or more actuators of the wind turbine, event data indicative of an event occurring at the wind turbine, alarm data associated with the wind turbine, warning data associated with the wind turbine, measurement metric data associated with the wind turbine, one or more wind turbine characteristics associated with the wind turbine, a wind turbine identifier, and a time parameter. The operational data 44 may be cloud-based data, data retrieved from the wind turbine upon request, and/or data transmitted to a data center or other data store arranged to collect and store operational data.

In the figure, collected operational data 44 associated with the wind turbines may be transmitted to a data repository 50, such as a data center, for storage and retrieval. The data repository 50 may be seen as a data storage unit, which may be used for storing data associated with one or more wind turbines, such as operational data.

Data associated with one or more wind turbines (such as operational data, e.g. including wind turbine data) may comprise data indicative of wind turbine characteristics and operations, such as fluid level, vibrational data, mechanical data, generator data, power output data, wind turbine model, and/or a wind turbine identifier. The data repository 50 may be configured to store the data associated with one or more wind turbines, such as operational data, such as historical operational data including e.g. historical wind turbine data. The data stored in the data repository 50 may be stored so that data associated with an individual wind turbine can be retrieved.

The operational data 44 associated with the operations of wind turbines of a wind turbine park 40 may also be transmitted to a local and/or remote operations center 78. Personnel and/or electronic devices at the operations center may analyze the operational data 44 associated with respective wind turbines to obtain information on current and/or upcoming faults. When the operational data associated with the wind turbines deviates from data expected under normal operations, the operations center may provide a service notification 84 to e.g. a service team or a support facility 80 to provide instruction information. The operations center 78 may be configured to retrieve data from the data repository 50, and/or from a database for storing, inter alia, the operational data 44. For example, the operations center 78 retrieves operational data 44 from the data repository 50, additionally or alternatively to operational data 44 from the wind turbine park 40.

Service log data, such as information on historical service visits, historical maintenance, and historical faults may be stored in a service database, such as a service database 60.

The present disclosure can be seen as providing a multi-layer system, such as a two-layer system, using layers of machine learning algorithms for troubleshooting faults at a wind turbine. For example, the multi-layer system includes a root-cause analyzer, RCA, 64 and a solver 74 (also referred to as a problem solver). For example, the RCA 64 can be seen as a first layer of the multi-layer system and the solver 74 may be seen as a second layer of the multi-layer system.

The RCA 64 may receive operational data 52 associated with a wind turbine from the data repository 50, e.g., by querying the data repository 50 or by pushed transmission from the data repository 50. The RCA 64 may be provided, e.g. from the operations center 78, a wind turbine identifier (WTID) 46 associated with the specific wind turbine. The WTID 46 may also be provided as part of the operational data 52. The RCA 64 may receive service log data 62 associated with the wind turbine from the service database 60. For example, the RCA 64 can use the operational data 52 (such as current operational data, and/or historical operational data), service log data 62 (such as current service log data, and/or historical service log data) to generate a set of candidate root causes of a fault. The fault may be a fault that has occurred, or that is predicted to occur.

For example, in the multi-layer system, the set 66 of candidate root causes generated in RCA 64 is provided to the solver 74. The solver 74 may use a retrieval-augmented generation (RAG) model to retrieve, from a maintenance protocol data repository 70, maintenance protocol data 72 associated with maintenance instructions of the wind turbine, such as of the wind turbine type given by WTID.

In some examples, the solver 74 may receive or retrieve service log data 62 from the service database 60.

For example, the solver 74 employs a second machine learning model that is applied to the maintenance protocol data and the set 66 of candidate root causes, to determine a response(s) to the candidate root cause(s) and provide a work instruction 76 (such as a recommended course of action) as a solution to the fault. The work instruction 76 may be provided 76 to the operations center 78. In some examples, the work instruction 76 may be provided to a service center 80 associated with the wind turbine and/or wind turbine park 40. The service center 80 may be operated by personnel, such as service personnel, and/or the support facility may operate autonomously. The operations center 78 may provide a service notification 84, based on e.g. the work instruction 76 provided by the solver 74. The service notification 84 may provide a suggestion to a solution to alleviate, remedy, and/or correct operations associated with obtained operational data deviating from expected operations.

The service center 80, receiving the service notification 84, may transmit, e.g. via remote access, a control operation 82 to the wind turbine associated with the WTID. The control operation 82 transmitted to the wind turbine may alleviate, remedy, anticipate, and/or correct the fault.. The service center 80 may send a manual work instruction 92 for scheduling a service team to visit the wind turbine associated with the WTID, to alleviate, remedy, anticipate, and/or correct the fault.

The operational data may indicate a fault in the wind turbine associated with the WTID, such as a fault that has occurred, or is likely to occur, or is imminent. For example, the fault is associated with a halt in the operations of the wind turbine. In some examples, a fault (a predicted fault, a foreseen fault, a potential fault, and/or an imminent fault) may be detected via the operational data deviating from expected operational data expected under normal conditions.

A service notification 84 may be provided to the service center 80 based on a predicted fault, a foreseen fault, a potential fault, and/or an imminent fault. The service center 80 may provide instructions, to the wind turbine potentially affected by the predicted fault and/or to a service facility in control of the wind turbine in question. The instructions provided by the service center 80 may be based on a work instruction 76 provided by the solver 74. The instructions may result in anticipating and avoiding the predicted fault, which may result in reduced down-time for the wind turbine.

In an example where the disclosed technique is applied to vibrational data, the one or more sensors and/or actuators associated with a wind turbine may detect vibrational data that deviates from vibrational data expected under normal operations and transmit the vibrational data as part of operational data 44 to the data repository 50. For example, vibrational data that deviates from vibrational data expected under normal operations may occur in a situation where e.g. a yaw-ring, a gear, and/or a ball-bearing requires additional lubrication. For example, the data repository 50 may transmit the vibrational data as part of data 52 to the RCA 64. The RCA 64 may optionally obtain service log data 62 associated with the wind turbine and may determine a set of candidate root causes. The RCA 64 provides the set 66 of candidate root causes to the solver 74. The solver 74 retrieves maintenance protocol data 72 associated with the wind turbine, determines a response to the candidate root cause(s) and provides e.g. a work instruction 76. The work instruction 76 may for example indicate applying lubrication to a yaw-ring, a gear, and/or a ball bearing that may alleviate, remedy and/or correct the anticipated fault.

It may be appreciated that ML-based RCA can run periodically or continuously and that upon detection of a fault (e.g. occurred, or predicted future fault), the RCA provides candidate root cause(s) to the ML-based solver that generates, based on maintenance protocol data, responses that are used to provide work instructions as recommendation to handle the fault. In one or more examples, the RCA may be prompted for execution in order to generate candidate root cause(s), e.g. by receiving prompts or input.

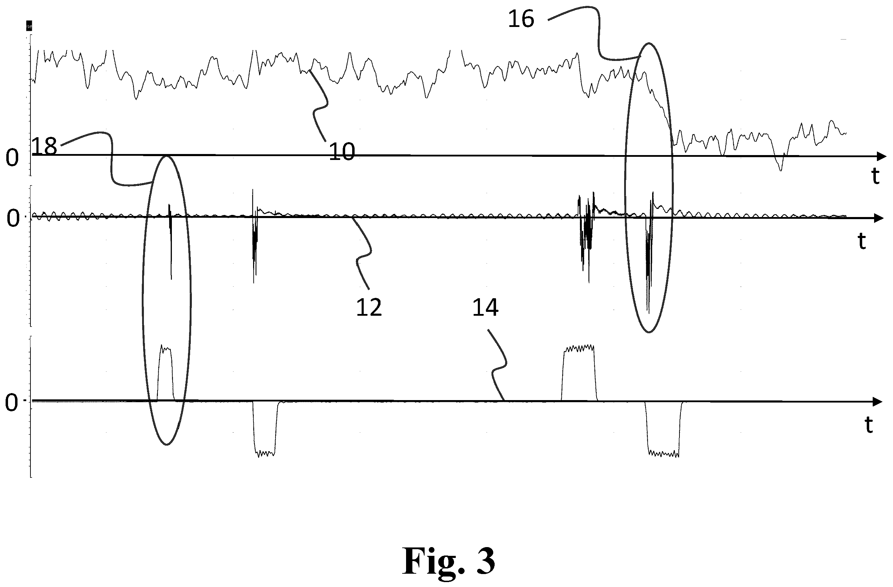

Fig. 3 shows an example graph representative of time-dependent data associated with a wind turbine. The graph comprises three data outputs of a wind turbine vs time. The three data outputs represent generator speed 10, tower accelerator Y-director 12, and yaw speed 14, respectively.

The generator speed 10 may be indicative of the power output of a wind turbine. The tower accelerator Y-director 12 may be indicative of vibrational data obtained by sensors and/or actuators associated with a wind turbine. The yaw speed 14 may be seen as the rotational speed of the nacelle of a wind turbine, around a vertical axis. Rotation of the nacelle of a wind turbine may occur to e.g. optimize the power generated by the wind turbine, or by a wind turbine park the wind turbine is associated with.

In Fig. 3, a first event 18 occurs during the operation of a wind turbine. During the first event 18, the yaw speed 14 temporarily increases, indicating a rotation of the nacelle around a vertical axis. During the rotation the amplitude of the tower accelerator Y-director 12 increases, indicating an increases tower vibration in the Y-direction. The generator speed 10 is largely unaffected by the increased vibration in the Y-direction. A wind turbine may have tolerances for example relating to vibrations in the y-direction, with signals within the tolerances allowing normal operations. When a sensor and/or actuator detects a signal higher than a given tolerance, the operations of a wind turbine may be halted, and/or the generator speed may be decreased.

Fig. 3 shows a further event 16, occurring at a time later than the first event 18. The further event 16 shows change in the yaw speed 14 of a wind turbine. The change in yaw speed 14 correlates to a change in amplitude of the tower vibration in the Y-direction 14.

During the second event the change in amplitude of tower vibration in the Y-direction 14 is larger than the change in amplitude of tower vibration in the Y-direction 14 during the first event 18. The larger change in amplitude of tower vibration in the y-direction 14, may be seen as out of tolerance, and causes the wind turbine to significantly derate the generator speed 10, resulting in decreased power output.

The system 300 may e.g. allow for determining, based on the operational data for tower vibration in the Y-direction 14, a candidate root cause and/or set of candidate root causes resulting in the wind turbine being derated, and may provide a work instruction, to alleviate, remedy and/or correct the root cause leading to the predicated fault. The work instruction may for example comprise lubricating the yaw system, such as the yaw ring.

In some examples, the system 300 may allow for detecting a potential future fault occurring during the first event 18. Detecting a potential future fault, such as the one occurring during the second event, may allow for a service team and/or a remote operator to receive a service notification and perform a service to alleviate, remedy, and/or correct the root cause responsible for a potentially future fault.

Fig. 3 illustrates a fault which can be seen in three different signals, but which is not apparent from any of the signals on their own.

In the example of Fig. 2, the RCA receives from 50 operational data including these three signals. In one or more examples, an analysis is prompted by the derating of the turbine at 16. Based on a first ML routine, the ML identifies further signals which show anomalies at the same time as the derate, identifying 12 and 14. Based on service log data showing a recent service of the yaw ring, two RCA candidates are proposed, one being fault in lubrication of the yaw ring, another being a fault in the yaw motor control.

Using RAG, based on the RCA candidates, maintenance protocol data (e.g. service manuals) is consulted and a work instruction is provided for the technician, e.g. first inspect yaw motors and if no faults are detected, then inspect lubrication level. Further instructions may be given as how to inspect yaw motors and lubrication level.

In one or more examples, the RCA can run continuously, identifying anomalies in 12 and 14 at 18, before derate at 16. Here the same work instructions can be generated, but at a time where a fault has not yet been detected, the work instruction may be classified as less urgent. For example, as further events are detected at 18' and 18", the urgency may be increased, potentially leading to repair prior to 18.

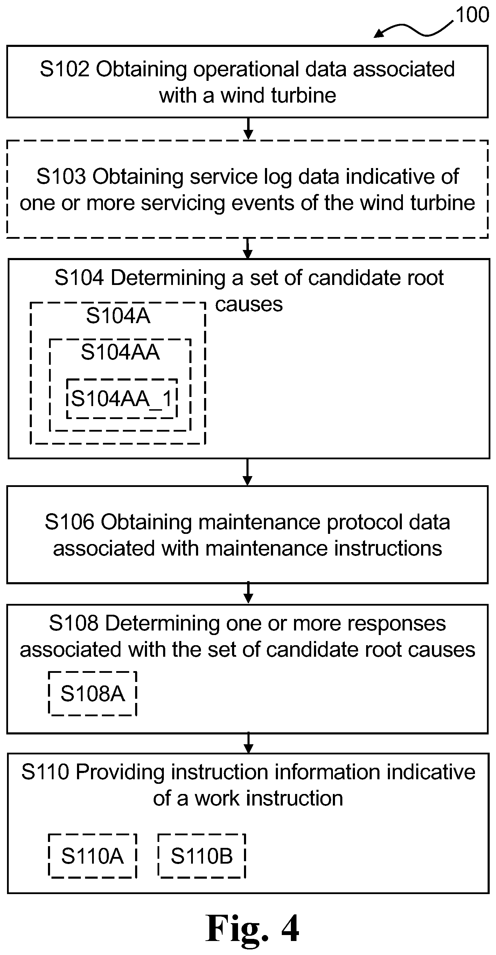

Fig. 4 shows a flow diagram of an example method 100, for providing one or more work instructions in response to a candidate root cause of a fault, according to the disclosure. The method 100 may be performed by a wind turbine monitoring system, such as the wind turbine monitoring system disclosed herein, such as the wind turbine monitoring system 300 of Figs. 2 and 5. The method 100 may be performed for providing one or more responses, in form of work instructions, to a candidate root cause of a fault.

The method 100 comprises obtaining S102 operational data associated with a wind turbine. For example, obtaining S102 the operational data associated with the wind turbine comprises receiving and/or retrieving the operational data associated with the wind turbine. The operational data may be seen as data indicative of one or more operations of the wind turbine, such as wind turbines 20, 22, 24, and/or 26 shown in Fig. 1. In other words, the operational data may comprise wind turbine data of the wind turbine. Operational data can be seen as wind turbine data indicative of one or more alerting events of the wind turbine, wherein the wind turbine data comprises warning data indicative of a warning state of the wind turbine, and/or alarm data indicative of an alarm state of the wind turbine. The operational data may comprise live data and/or event data. Event data may be associated with an event, such as an alarm event. In S102, the operational data may be obtained from the wind turbine, directly or via a data repository and/or a turbine watch.

In one or more example methods, the operational data comprises one or more of: sensor data from one or more sensors of the wind turbine, log data associated with the wind turbine, actuator data from one or more actuators of the wind turbine, alarm data associated with the wind turbine, warning data associated with the wind turbine, measurement metric data associated with the wind turbine, one or more wind turbine characteristics associated with the wind turbine, a wind turbine identifier, and a time parameter.

For example, the operational data may be seen as part of a vast amount of information which the wind turbine monitoring system may analyze and process for determining a set of candidate root causes of a fault of the wind turbine.

In some examples, obtaining S102 the operational data comprises obtaining the operational data associated with a wind turbine, upon detection of a fault of the wind turbine.

The method 100 comprises determining S104, based on the operational data, a set of candidate root causes by applying S104A a first machine learning, ML, model to the operational data. A candidate root cause can be seen as potential (e.g., likely, possible, and/or probable) root cause leading to and/or generating the fault. The set of candidate root causes for example comprises one or more candidate root causes, e.g., associated with a given fault of the wind turbine. In some examples, the wind turbine monitoring system (such as the RCA of the wind turbine monitoring system) may output one or more root causes associated of the set of candidate root causes. The determining S104 of a set of candidate root causes is based on analyzing the operational data (such as current and historical operational data). In some examples, the set of candidate root causes may be seen as an ordered set of candidate root causes, such as a prioritized list of root causes.

The first ML model is for example configured to take as input the operational data associated with the wind turbine and to output the set of candidate root causes. In one or more example methods, the first ML model comprises a root cause analyser configured to determine, based on the operational data, a set of candidate root causes by classifying the operational data into one or more root cause categories.

The root cause analyser may for example be seen as an analyser configured to determine one or more root causes of a fault of the wind turbine. In some examples, the root cause analyser may be configured to determine one or more candidate root causes, e.g., based on the operational data and/or one or more root cause categories. In other words, the root cause analyser may perform root cause analysis by classifying the operational data into one or more root cause categories. The root cause categories may for example be seen as a category associated with a given root cause. For example, the root cause category may be seen as a type of root cause that results in a fault of the wind turbine. The one or more root causes in the set of candidate root causes may be classified into the root cause categories. Examples of root cause categories include: Code, Hardware, Configuration, etc.

In one or more example methods, the first ML model comprises a first transformer model and/or a classifier. The first transformer model can for example be seen as a model configured to encode the operational data and output a set of candidate root causes. In other words, the transformer model may be seen a model architecture comprising encoder and decoder components that may comprise one or more ML layers. In some examples, these layers facilitate the transformation of operational data into an intermediate state and/or subsequently into a determined set of candidate root causes. For example, the first ML model can determine the one or more candidate root causes based on the operational data and one or more root cause categories. For example, the root cause analyser can include a classifier. The classifier may for example be seen as a classifier model. In some examples, the classifier may be seen as an ML model configured to categorise, such as classify, operational data into one or more classes and/or categories. In some examples, the classifier may be trained on labelled datasets of operational data to learn patterns or features indicative of different categories.

The method 100 comprises obtaining S106, based on the set of candidate root causes, maintenance protocol data associated with maintenance instructions of the wind turbine. In some examples, obtaining S106 based on the set of candidate root causes, maintenance protocol data associated with maintenance instructions of the wind turbine comprises receiving and/or retrieving, e.g., based on the set of candidate root causes, maintenance protocol data associated with maintenance instructions of the wind turbine. For example, the maintenance protocol data is obtained in S106 from a maintenance protocol data repository.

The maintenance protocol data may for example be seen as information indicative of a maintenance protocol of a wind turbine. The maintenance protocol can in some examples be seen a protocol, such as procedure and/or a set of instructions, for maintaining the wind turbine. For example, the maintenance protocol data comprises data represented in one or more documents associated with a given wind turbine or wind turbine model. For example, the maintenance protocol data for a given wind turbine (or wind turbine model) comprises data from a manual for that given wind turbine (or wind turbine model). In some examples, the maintenance protocol data may be stored in a database and/or knowledge base. For example, a maintenance protocol data repository (such as a database and/or knowledge base) may store data indicative of one or more documents associated with a given wind turbine or wind turbine model. Maintenance instructions can for example be seen as instructions indicating how maintenance, such as repairs, to the wind turbine may be performed.

The method 100 comprises determining S108, based on the maintenance protocol data and the set of candidate root causes, the one or more responses associated with the set of candidate root causes. In some examples, the one or more responses are an output of a second ML model. The one or more responses may for example comprise a first response, a second response, a third response, etc. The one or more responses may be seen as one or more responses to candidate root causes. For example, for each of the candidate root causes in the set of candidate root causes, one or more responses can be determined. The one or more responses may for example be indicative of one or more actions associated with alleviating a fault (such as remedying and/or correcting, and/or allowing to avoid). The one or more responses may be used to provide and/or generate a work instruction, such as a recommendation, and a recommended course of action, in response to a fault in a wind turbine. The one or more responses may be in any format, not necessarily in intelligible text, such as JavaScript Object Notation, Comma-Separated Values, and/or eXtensible Markup Language. The one or more responses may be a command and/or an index of a look up table indexing the maintenance protocol data.

In one or more example methods, determining S108 the one or more responses comprises applying S108A, based on the set of candidate root causes, a second ML model to the maintenance protocol data. The second ML model may be configured to determine the one or more responses based on the maintenance protocol data and the set of candidate root causes. The second ML model may obtain the set of candidate root causes and the maintenance protocol data as an input. Upon determining a set of candidate root causes, a response can be determined by applying a second ML model (such as specific signal treatment, e.g. by applying a given signal analysis tool).

In one or more example methods, the second ML model comprises a solver model configured to generate, based on the maintenance protocol data and the set of candidate root causes, the one or more responses. In some examples, the solver model (such as solver 74 of Fig. 2) is configured to determine a recommendation for solving the fault of the wind turbine, such as to alleviate, remedy, and/or correct the fault of the wind turbine.

In one or more example methods, the second ML model comprises one or more of: a retrieval-augmented generation model and a second transformer model. A retrieval augmented generation, RAG, model may be seen as a model that combines retrieval-based and generation-based techniques. The RAG model is for example configured to store and retrieve the one or more responses, based on the querying a maintenance protocol data repository using the set of candidate root causes. In some examples, the RAG model performs one or more of: indexing (such as indexing of maintenance protocol data and/or service log data), retrieval (such as retrieval of maintenance protocol data and/or service log data), augmentation associated with the second transformer model (such as prompt augmentation), and generation of the one or more responses. In one or more example methods, the retrieval-augmented generation model is configured to retrieve, based on at least one candidate root cause of the set of candidate root causes, information from the maintenance protocol data. In one or more example methods, the retrieval-augmented generation model is configured to generate, based on the retrieved information from the maintenance protocol data, the one or more responses. The retrieved information from the maintenance protocol data retrieved by the retrieval-augmented generation model may be associated with the at least one candidate root cause. For example, RAG may retrieve from the maintenance protocol data repository and/or service database, context information before incorporating the retrieved information into the one or more responses. In some examples, RAG may enable the second transformer model, to retrieve and/or incorporate information beyond the maintenance protocol data upon which was trained, e.g., without needing to be retrained. In other words, by dynamically retrieving information, RAG may enable the second ML model to provide one or more responses having an improved accuracy without frequent retraining.

The second ML model for example comprises a solver model configured to generate, using Retrieval Augmented Generation (RAG), the one or more responses based on the maintenance protocol data and the set of candidate root causes.

In one or more example methods, the second transformer model comprises one or more of: a large language model and a generative pre-trained transformer model. The second transformer model can for example may be seen as a model configured to encode the set of candidate root causes and maintenance protocol data and output the one or more responses. In some examples, the second transformer model comprises one or more ML model layers. In some examples, the one or more ML layers facilitate a transformation of the set of candidate root causes and maintenance protocol data into an intermediate state and/or subsequently into a determined output. A large language model, LLM, can for example be seen as an ML model for natural language processing, NLP. A generative pre-trained transformer model can be seen as a type of LLM. The generative pre-trained transformer model may for example be based on a transformer deep learning architecture. In some examples, the transformer model comprises one or more of: GPT-4, GPT-4o, and GPT-o1. In one or more example methods, RAG may improve the accuracy of outputs of LLMs, such as GPT-4, GPT-4o, and GPT-o1. In other words, RAG may enable LLMs to generate more informed and contextually grounded responses, e.g., by retrieving information from the maintenance protocol data repository and/or service database.

The method 100 comprises providing S110, based on the one or more responses, instruction information indicative of a work instruction for a recommendation for solving the fault. The instruction information may for example be seen as information indicative of an instruction, such as an instruction indicative of a solution to the fault, such as a remedy to a candidate root cause of the set of candidate root causes determined in S104.

A work instruction as disclosed herein may in some examples be indicative of an action to be carried out by a wind turbine and/or by a user, such as an operator of the wind turbine and/or a service technician of the wind turbine. In other words, the work instruction may indicate one or more corrective measures and/or repairs to be applied to the wind turbine that may rectify the fault of the wind turbine, such as by rectifying the fault e.g. by addressing the one or more candidate root causes of the set of candidate root causes determined in S104. The work instruction may comprise for example an instruction for an operation, such as one or more of: a solving operation, an alleviating operation, a remedying operation, and a correcting operation. For example, the work instruction can be about checking a tank volume, refilling a coolant, inspecting for leak and damage, checking blockages, testing, and replacing sensors, inspecting, and replacing a tower top accelerometer, performing a structural assessment, controlling the system diagnostics, reviewing the alarm settings, etc. The recommendation may be seen as a recommendation for a course of action, such as a recommended course of action. The recommendation may be associated with a course of action to alleviate and/or mitigate e.g. a fault. The recommendation may be associated with a recommended course of action for solving for example a fault. In some examples, solving the fault can be seen as alleviating the fault, remedying the fault, and/or correcting the fault.

In some examples, providing S110 instruction information indicative of a work instruction for a recommendation for solving the fault comprises generating, based on the one or more responses, the instruction information indicative of a work instruction for a recommendation for solving the fault. Solving the fault may comprise one or more of: alleviating the fault, remedying the fault, and correcting the fault.

In some examples, providing S110, based on the one or more responses, instruction information indicative of a work instruction for a recommendation for solving the fault comprises transmitting and/or displaying the instruction information indicative of a work instruction for a recommendation for solving the fault.

In one or more example methods, the method 100 comprises obtaining S103 service log data indicative of one or more servicing events of the wind turbine. Service log data may be seen as data recorded during and/or after a service (e.g., maintenance, repair) of the wind turbine. The term "service log data" for example comprises one or more types of data (e.g., records), such as timestamped entries, data from maintenance personnel notes, parts replaced, diagnostics results, logs, and/or operational status reports. In some examples, the service log data may be indicative of a duration and/or frequency of maintenance events. In one or more example methods, the service log data comprises one or more of: maintenance data, historical maintenance data, and historical fault data. For example, the maintenance data may be associated with one or more repair reports and/or maintenance reports of the wind turbine. The historical maintenance data for example comprises one or more repair historical reports and/or historical maintenance reports of the wind turbine. The historical fault data can for example be seen as data indicative of one or more past faults of the wind turbine. The service log data may comprise data extracted from e.g. service reports, such as reports on historical maintenance events. Historical maintenance events may comprise information on past maintenance on the wind turbine, such as service instructions associated with the wind turbine. In some examples, the service log data may comprise service information associated with one or more servicing events of the wind turbine, such as component exchange and/or modification, service of lubrication systems, adjustment of fluid levels, or any system adjustments and/or service performed on the wind turbine. The servicing event can be seen as any service performed on the wind turbine, such as for maintenance of the wind turbine. The servicing events may for example be performed by a service technician of the wind turbine.

In one or more example methods, determining S104, based on the operational data, the set of candidate root causes by applying S104A the first ML model to the operational data comprises determining S104AA, based on the operational data and the service log data, the set of candidate root causes by applying S104AA_1 the first ML model to the operational data and the service log data. In one or more example methods, determining the set of candidate root causes may optionally be based on service data. Service data may comprise data from the service database.

In one or more example methods, the operational data comprises one or more of: sensor data from one or more sensors of the wind turbine, log data associated with the wind turbine, actuator data from one or more actuators of the wind turbine, alarm data associated with the wind turbine, warning data associated with the wind turbine, measurement metric data associated with the wind turbine, one or more wind turbine characteristics associated with the wind turbine, and a time parameter.

Sensor data can for example be seen as data obtained using one or more sensors of the wind turbine. The sensor data may be associated with live operational data from the wind turbine, and may comprise e.g. real-time operational data from the wind turbine and/or quasi real-time operational data from the wind turbine. For example, the one or more sensors associated with the wind turbine may be located inside of, outside of, and/or near the wind turbine. Sensor data may comprise one or more of: mechanical data, vibrational data, movement data, electrical data, wind data (such as wind speed or wind direction), humidity data and temperature data.

Measurement metric data may be seen as metric data associated with the wind turbine. Measurement metric data may be seen as data indicative of measurements metric regarding power output, turbine efficiency, operational time, maintenance, mechanical load, rotor speed, voltage, frequency etc. For example, measurement metric data may comprise e.g. telemetry data from the wind turbine.

The log data for example comprises one or more logs associated with the wind turbine. Log data can for example be seen as telemetry data, such as monitoring data, resulting in monitoring of the wind turbine.

The actuator data is for example indicative of one or more actuations and/or positions of the one or more actuators of the wind turbine. The actuator data may be associated with a movement of a wind turbine or a part of a wind turbine.

Alarm data can be seen as data associated with an alarm of the wind turbine. For example, alarm data indicative of an alarm having previously occurred for the given wind turbine. In other words, the alarm data may for example be associated with an alarm resultant from a previous fault of the wind turbine.

The warning data may be seen as data indicative of a warning associated with the wind turbine. The warning data may be associated with sensor data and/or actuator data, that is approaching levels outside of tolerance. Warning data may prompt one or more of: a warning message, an alarm, a change in the operations, and a halt of operations.

The one or more wind turbine characteristics associated with the wind turbine may be for example be indicative of one or more characteristics and/or properties of the wind turbine. In some examples, the one or more wind turbine characteristics comprise a wind turbine identifier indicative of an identity of a particular wind turbine and/or a type of wind turbine. In some examples, the one or more wind turbine characteristics comprise a wind turbine model identifier. The wind turbine model identifier is for example indicative of a given model, e.g., type, of wind turbine. For example, the wind turbine model identifier may be indicative of a wind turbine rating, such as being a 2MW, 4MW, or 9MW wind turbine. In some examples, the one or more wind turbine characteristics comprise a software identifier, e.g., indicative of a type of software utilised by the wind turbine. The software may be configured for e.g. receiving a work instruction, obtaining operational data, communicating with an external device (for example via an interface), and/or controlling an operation of a wind turbine. In some examples, the one or more wind turbine characteristics comprise a maker identifier, e.g., indicative of a manufacturer of the wind turbine.

In some examples, the one or more wind turbine characteristics comprise one or more configuration settings, e.g., indicative of a configuration of the wind turbine. In some examples, configuration settings may a comprise one or more of: an orientation of the wind turbine, a generator speed of the wind turbine, an angle of wind turbine blades, and an operational state of the wind turbine, hereunder a power generation state.

The time parameter can be seen as a parameter indicative of a time. For example, the time parameter may indicate a time at which data was recorded. A time at which data was recorded may comprise one or more of: a date and a time during a day. In other words, the time parameter may in some examples be seen as a time stamp. In some examples, the sensor data, log data, actuator data, alarm data, warning data, and one of more wind turbine characteristics may be associated with a time parameter.

In one or more example methods, providing S110, based the one or more responses, the instruction information comprises generating S110A, based on the one or more responses, control data for controlling the wind turbine and/or for causing control of the wind turbine. For example, the control information may be seen as control signals for operational instructions for the wind turbine according to which the wind turbine may operate. In other words, the wind turbine may perform one or more operations in accordance with, such as in response to receiving, the control information provided in S110 by the wind turbine monitoring system.

In one or more example methods, providing S110, based the one or more responses, the instruction information comprises communicating S110B the instruction information via an interface. In some examples, communicating the instruction information may be associated with communicating the instruction information to e.g. an external device, such as a controller, a data repository, a turbine watch, an electronic device of a user and/or of a service technician, and/or a support facility device. In some examples, communicating the instruction information via an interface comprises providing a communication to a user (e.g. via a user interface) and/or to a controller of the wind turbine. For example, communicating the instruction information may comprise communicating the instruction information via e.g. an interface, such as a wireless interface. In some examples, communicating the instruction information via an interface comprise displaying a user interface object representative of the instruction information (such as work instruction, and/or action) and/or emitting an audio signal representative of the instruction information.

In one or more example methods, the first ML model is trained based on one or more of: historical operational data, historical service log data, historical fault data, historical maintenance protocol data, and historical sets of candidate root causes. Historical operational data may be associated with previous operational data. Historical operational data may be stored in data repository, such a service database. Historical service log data may be associated with previous service log data. Historical service log data may be stored in data repository, such a service database. Historical service log data may comprise data indicative of e.g. a service team visit to a wind turbine and/or a remote service operation at a wind turbine. Historical fault data may be associated with previous fault data. Historical fault data may be associated with data comprising information on one or more faults associated with a wind turbine, having previously occurred. Historical fault data may be stored in data repository, such a service database.

Historical maintenance protocol data may be associated with previous maintenance protocols. Historical maintenance protocols may comprise information relating to maintenance of wind turbines.

Historical sets of candidate root causes may comprise sets of candidate root causes, previously determined. For example, historical sets of candidate root causes may comprise sets of root causes determined by a ML model, such as the first ML model.

In one or more example methods, the second ML model is trained based on one or more of: historical sets of candidate root causes, maintenance protocol data, and service log data. Historical sets of candidate root causes may comprise sets of candidate root causes, previously determined. For example, historical sets of candidate root causes may comprise sets of root causes determined by a ML model, such as the first ML model.

Fig. 5 shows a block diagram of an example wind turbine monitoring system 300 according to the disclosure. The wind turbine monitoring system 300 comprises memory circuitry 301, processor circuitry 302, and an interface 303. The wind turbine monitoring system 300 is configured to perform any of the methods disclosed in Fig. 4. In other words, the wind turbine monitoring system 300 is configured for providing one or more responses to a candidate root cause of a fault. For example, the wind turbine monitoring system 300 is configured for enabling control of operation of a wind turbine, such as for controlling operation of a wind turbine. For example, the wind turbine monitoring system 300 may be a controller of a wind turbine, such as an internal controller of the wind turbine and/or an external controller. For example, the wind turbine monitoring system 300 may be a device remote from the wind turbine. In some examples, the wind turbine monitoring system 300 comprises a wind turbine diagnostics device and/or a wind turbine control device.

The wind turbine monitoring system 300 is configured to obtain (e.g., via processor circuitry 302 and/or interface 303) operational data associated with a wind turbine.

The wind turbine monitoring system 300 is configured to determine (e.g., via processor circuitry 302), based on the operational data, a set of candidate root causes e.g., by applying (e.g., via processor circuitry 302) a first machine learning, ML, model to the operational data.

The wind turbine monitoring system 300 is configured to obtain (e.g., via memory circuitry 301, processor circuitry 302 and/or interface 303), based on the set of candidate root causes, maintenance protocol data associated with maintenance instructions of the wind turbine.

The wind turbine monitoring system 300 is configured to determine (e.g., via memory circuitry 301 and/or processor circuitry 302), based on the maintenance protocol data and the set of candidate root causes, the one or more responses associated with the set of candidate root causes. The wind turbine monitoring system 300 is configured to determine the one or more responses, e.g., by applying (e.g., via the processor circuitry 302), based on the set of candidate root causes, a second ML model to the maintenance protocol data.

The wind turbine monitoring system 300 is configured to provide (e.g., via processor circuitry 302 and/or interface 303), based on the one or more responses, instruction information indicative of a work instruction for a recommendation for solving the fault.

The processor circuitry 302 is optionally configured to perform any of the operations disclosed in Fig. 4 (such as any one or more of: S102, S103, S104, S104A, S104AA, S106, S108, S108A, S110, S110A, S110AA). The operations of the electronic device 300 may be embodied in the form of executable logic routines (e.g., lines of code, software programs, etc.) that are stored on a non-transitory computer readable medium (e.g., the memory circuitry 301) and are executed by the processor circuitry 302).

Furthermore, the operations of the wind turbine monitoring system 300 may be considered a method that the wind turbine monitoring system 300 is configured to carry out. Also, while the described functions and operations may be implemented in software, such functionality may as well be carried out via dedicated hardware or firmware, or some combination of hardware, firmware and/or software.

The memory circuitry 301 may be one or more of a buffer, a flash memory, a hard drive, a removable media, a volatile memory, a non-volatile memory, a random access memory (RAM), or other suitable device. In a typical arrangement, the memory circuitry 301 may include a non-volatile memory for long term data storage and a volatile memory that functions as system memory for the processor circuitry 302. The memory circuitry 301 may exchange data with the processor circuitry 302 over a data bus. Control lines and an address bus between the memory circuitry 301 and the processor circuitry 302 also may be present (not shown in Fig. 5). The memory circuitry 301 is considered a non-transitory computer readable medium.

The memory circuitry 301 may be configured to operational data, a set of candidate root causes, maintenance protocol data, maintenance instructions, one or more responses, a first ML model, a second ML model, instruction information, a work instruction, service log data, control data, historical operational data, historical service log data, historical fault data, historical maintenance protocol data, and/or historical sets of candidate root causes in a part of the memory.

The various exemplary methods, devices, nodes, and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A method, performed by a wind turbine monitoring system, for providing one or more responses to a candidate root cause of a fault, the method comprising;
- obtaining (S102) operational data associated with a wind turbine;
- determining (S104), based on the operational data, a set of candidate root causes by applying (S104A) a first machine learning, ML, model to the operational data;
- obtaining (S106), based on the set of candidate root causes, maintenance protocol data associated with maintenance instructions of the wind turbine;
- determining (S108), based on the maintenance protocol data and the set of candidate root causes, the one or more responses associated with the set of candidate root causes, wherein determining (S108) the one or more responses comprises applying (S108A), based on the set of candidate root causes, a second ML model to the maintenance protocol data; and
- providing (S110), based on the one or more responses, instruction information indicative of a work instruction for a recommendation for solving the fault.

2. The method according to claim 1, wherein the first ML model comprises a root cause analyser configured to determine, based on the operational data, a set of candidate root causes by classifying the operational data into one or more root cause categories.

3. The method according to any of the previous claims, wherein the first ML model comprises a first transformer model and/or a classifier.

4. The method according to any of the previous claims, wherein the second ML model comprises a solver model configured to generate, based on the maintenance protocol data and the set of candidate root causes, the one or more responses.

5. The method according to any of the previous claims, the method comprising obtaining (S103) service log data indicative of one or more servicing events of the wind turbine; and wherein determining (S104), based on the operational data, the set of candidate root causes by applying (S104A) the first ML model to the operational data comprises determining (S104AA), based on the operational data and the service log data, the set of candidate root causes by applying (S104AA_1) the first ML model to the operational data and the service log data.

6. The method according to claim 5, wherein the service log data comprises one or more of: maintenance data, historical maintenance data, and historical fault data.

7. The method according to any of the previous claims, wherein the second ML model comprises one or more of: a retrieval-augmented generation model and a second transformer model.

8. The method according to claim 7, wherein the retrieval-augmented generation model is configured to:
- retrieve, based on at least one candidate root cause of the set of candidate root causes, information from the maintenance protocol data; and
- generate, based on the information, the one or more responses.

9. The method according to any of claims 3-8, wherein the second transformer model comprises one or more of: a large language model and a generative pre-trained transformer model.

10. The method according to any of the previous claims, wherein the operational data comprises one or more of: sensor data from one or more sensors of the wind turbine, log data associated with the wind turbine, actuator data from one or more actuators of the wind turbine, alarm data associated with the wind turbine, warning data associated with the wind turbine, measurement metric data associated with the wind turbine, one or more wind turbine characteristics associated with the wind turbine, and a time parameter.

11. The method according to any of the previous claims, wherein providing (S110), based the one or more responses, the instruction information comprises generating (S110A), based on the one or more responses, control data for controlling the wind turbine and/or for causing control of the wind turbine.

12. The method according to any of the previous claims, wherein providing (S110), based the one or more responses, the instruction information comprises communicating (S110B) the instruction information via an interface.

13. A wind turbine monitoring system comprising memory circuitry, an interface and processor circuitry, wherein the wind turbine monitoring system is configured to perform any of the methods according to any of claims 1-12.

14. A wind turbine comprising the wind turbine monitoring system according to claim 13.

15. A computer storage medium storing one or more programs, the one or more programs comprising instructions, which when executed by an electronic device cause the electronic device to perform any of the methods of claims 1-12.
